# EUROPEAN PATENT SPECIFICATION

(11) **EP 2 483 989 B1**
(45) Date of publication and mention of the grant of the patent: **29.07.2015**
(21) Application number: 10759685.0
(22) Date of filing: 30.09.2010
(51) Int. Cl.: H02J 7/00, H02J 7/02, H04M 19/00, H02J 7/34

(54) **DEVICE FOR SUPPLYING ELECTRIC POWER TO A MOBILE TELECOMMUNICATION EQUIPMENT, AND PORTABLE EQUIPMENT USING THE SAME**
VORRICHTUNG ZUR STROMVERSORGUNG EINES MOBILEN TELEKOMMUNIKATIONSGERÄTS UND TRAGBARES GERÄT DAMIT
DISPOSITIF D'ALIMENTATION ÉLECTRIQUE D'UN ÉQUIPEMENT DE TÉLÉCOMMUNICATION MOBILE, ET ÉQUIPEMENT PORTABLE L'UTILISANT

(30) Priority: 30.09.2009 FR 0904675
(43) Date of publication of application: 08.08.2012
(73) Proprietor: ST-Ericsson (Grenoble) SAS, 38000 Grenoble (FR); ST-Ericsson SA, 1228 Plan-les-Ouates (CH)
(72) Inventor: GACHON, Cyrille, F-SAINT MERCELLIN 38160 (FR); LADRET, Daniel, F-LANS-EN-VERCORS 38250 (FR)
(74) Representative: Ström & Gulliksson AB
(86) International application number: PCT/EP2010/064597
(87) International publication number: WO 2011/039326

(56) References cited:
- EP-A1- 1 814 014
- EP-A2- 1 523 081
- WO-A1-2009/066859
- WO-A2-2009/066908
- JP-A- 2006 136 098
- US-A1- 2008 157 711
- KONINKLIJKE PHILIPS ELECTRONICS N V: "SCM7880 - Manuel de l'utilisateur", INTERNET CITATION, 17 September 2007 (2007-09-17), pages 1-08,61, XP007913180, Retrieved from the Internet: URL:http://download.p4c.philips.com/files/ s/scm7880_12/scm7880_12_dfu_fra.pd [retrieved on 2010-05-25]

## Description

The invention relates to a device for supplying electric power to a mobile telecommunication equipment to be integrated within the mobile telecommunication equipment for example, for a mobile phone or a laptop. EP 1814014 A1 discloses a travel charger having a battery compartment formed in a mains adapter for insertion of separable primary/secondary batteries. The invention is defined by the features of the independed claims. Preferred embodiments are defined in the dependent claims.

According to a first one of its aspects, the invention more particularly relates to a device for supplying electric power to a mobile telecommunication equipment comprising an electronic supply circuit comprising an input terminal designed to be plugged to the power grid, an output terminal adapted to be plugged to the portable equipment, a ground terminal electrically isolated from the input terminal, an electric power source arranged between the input and output terminals and adapted for supplying the portable equipment with electric power via the output terminal, the electric power source further being connected to the ground terminal and comprising a rechargeable battery for storing the electric power.

Such an electric power supplying device is well known by the skilled person to supply electric power, for example to a mobile phone. In view of the increasing electric power needs of mobile telecommunication equipments (and, particularly mobile phones which offer the user more and more services at the same time), a delicate compromise should be made between, on the one hand, the weight of the electric power source, and on the other hand, its capacity to restore electric power to supply said portable equipment.

Based on this original observation, the main object of the present invention is to propose a supply device which aims to reduce at least one of the previously mentioned limitations.

To this end, the supply device, which still further conforms to the generic definition given in the preamble above, is substantially characterized in that it comprises a switching regulator comprising:
▪ a servo switch comprising:
   - a first commutator arranged between the input terminal and the electric power source, and
   - a second commutator arranged between the electric power source and the output terminal,
▪ a management module comprising a first terminal connected to the first commutator and a second terminal connected to the second commutator, the management module being adapted to assess a charge state of the rechargeable battery, and to drive the servo switch according to said charge state, the first commutator is adapted to direct the electric power coming from the input terminal among the electric power source and the first terminal, the second commutator being adapted to direct the electric power coming from the second terminal among the electric power source and the output terminal.

Thanks to these arrangements, it is possible to supply sufficient electric power to the portable equipment while minimizing the weight of the electric power source. This contributes in broadening the functional possibilities of the supply device according to the invention.

According to a second one of its aspects, the invention relates to a mobile telecommunication equipment using the supply device according to the invention.

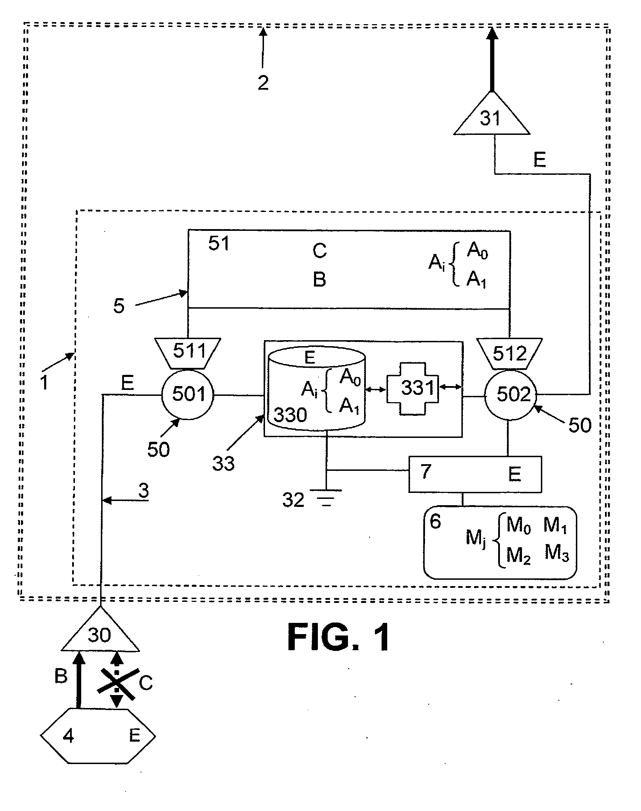

Other characteristics and advantages of the invention will appear in the description which follows, made for an illustrative and non limitative purpose, with reference to the accompanying fig.1 schematically representing a simplified view of a mobile telecommunication equipment comprising a device for supplying electric power according to the invention.

According to a first of its aspects, as previously mentioned and illustrated in fig. 1, the invention relates to a device 1 for supplying electric power E to a mobile telecommunication equipment 2 (for example, for a mobile telephone or a laptop). This supply device 1 comprises an electronic supply circuit 3 comprising:
▪ an input terminal 30 designed to be plugged to the power grid 4,
▪ an output terminal 31 adapted to be plugged to the portable equipment 2,
▪ a ground terminal 32 electrically isolated from the input terminal 30,
▪ an electric power E source 33 arranged between the input and output terminals 30, 31 and adapted to supply the mobile equipment 2 with electric power E via the output terminal 31. The electric power E source 33 is further connected to the ground terminal 32 and comprises a rechargeable battery 330 adapted to store the electric power E.

According to the invention, the supply device 1 comprises a switching regulator 5 comprising:
▪ a servo switch 50 comprising:
   - a first commutator 501 arranged between the input terminal 30 and the electric power E source 33, and
   - a second commutator 502 arranged between the electric power E source 33 and the output terminal 31,
▪ a management module 51 comprising a first terminal 511 connected to the first commutator 501 and a second terminal 512 connected to the second commutator 502, the management module 51 being adapted to assess a charge state Aᵢ of the rechargeable battery 330, and to drive the servo switch 50 according to said charge state Aᵢ, the first commutator 501 being adapted to direct the electric power E coming from the input terminal 30 among the electric power E source 33 and the first terminal 511, the second commutator 502 being adapted to direct the electric power E coming from the second terminal 512 among the electric power E source 33 and the output terminal 31.

Preferably, the management module 51 is adapted to assess an active connection state B between the input terminal 30 and the power grid 4. When, on the one hand, the connection between the input terminal 30 and the power grid 4 exhibits the active state B (that is to say, when the input terminal 30 is plugged to the power grid 4) and, on the other hand, the rechargeable battery 330 exhibits the charge state Aᵢ corresponding to the rechargeable battery 330 full charge A₀ (that is to say, Ai = A0), the servo switch 50 is adapted to supply the electric power E to the output terminal 31 form the input terminal 30 by bypassing the electric power E source 33 (for example, by passing through the management module 51 via the first and second terminals 511, 512).

Thanks to these arrangements, the supply device 1 is capable of supplying the mobile telecommunication equipment 2 with electric power E directly from the power grid 4 (without passing through the electric power E source 33). This tends to reduce a number of "charged/uncharged" cycles of the rechargeable battery 330 thus contributing to increase its service life.

Advantageously, the management module 51 is adapted, as specified above, to assess the active connection state B between the input terminal 30 and the power grid 4. When, on the one hand, the connection between the input terminal 30 and the power grid 4 exhibits the active state B and, on the other hand, the rechargeable battery 330 exhibits the charge state Aᵢ corresponding to the rechargeable battery 330 incomplete charge A₁ (that is to say, Aᵢ = A₁), the servo switch 50 is adapted to supply the electric power E from the input terminal 30, to both the output terminal 31 and to the electric power E source 33.

Thanks to these arrangements, the supply device 1 is capable of supplying the mobile telecommunication equipment 2 with electric power E directly from the power grid (without passing through the electric power E source 33) while recharging the rechargeable battery 330. This makes it possible to maintain the supply of the mobile telecommunication equipment 2 during the charging of the rechargeable battery 330. This contributes in broadening the functional possibilities of said supply device 1.

Preferably, the management module 51 is adapted to assess an interrupted connection state C between the input terminal 30 and the power grid 4. When the connection between the input terminal 30 and the power grid 4 exhibits the interrupted state C (that is to say, when the input terminal 30 is unplugged from the power grid 4), the servo switch 50 is adapted to supply electric power E to the output terminal 31 from the electric power E source 33.

Thanks to these arrangements, everything being unplugged from the power grid 4, the supply device 1 is able to supply the mobile telecommunication equipment 2 with electric power E. This contributes in broadening the functional possibilities of said supply device 1.

Advantageously, the supply device 1 may comprise at least one auxiliary power Mⱼ capturing module 6 adapted to detect the auxiliary power Mⱼ and a transformation module 7 connected to the capturing module 6 and adapted to transform the auxiliary power Mⱼ (provided by the capturing module 6 to the transformation module 7) into electric power E. The transformation module 7 is further mounted in parallel on the electric power E source 33 between the ground terminal 32 and the second terminal 512. The second commutator 502 is adapted to direct the electric power E coming from the transformation module 7 towards the electric power E source 33 and/or towards the output terminal 31.

Thanks to these arrangements, the supply device 1 is more environment-friendly as it can transform into electric power E, the auxiliary energy Mⱼ, preferably, of "renewable energy" type, thus contributing, in fine, to reduce greenhouse gases.

Advantageously, when the connection between the input terminal 30 and the power grid 4 exhibits the interrupted state C, the servo switch 50 is adapted to supply electric power E to the output terminal 31 via the second commutator 502, at the same time, from the transformation module 7 and from the electric power E source 33.

Thanks to these arrangements, the supply device 1 ensures the mobile telecommunication equipment 2 greater operating autonomy of in the absence of the power grid 4. In fact, at least one part of the electric power E is supplied to the mobile telecommunication equipment 2 from the transformation module 7, thus contributing to reduce as much the depletion of the rechargeable battery 330 (and which can, due to this fact, remain in working order for longer).

Preferably, when, on the one hand, the connection between the input terminal 30 and the power grid 4 exhibits the interrupted state C, and on the other hand, the rechargeable battery 330 exhibits the charge state Aᵢ corresponding to the rechargeable battery 330 incomplete charge A1, the servo switch 50 is adapted to supply the electric power E from the transformation module 7, to both the output terminal 31 and to the electric power E source 33.

Thanks to these arrangements, it is possible to use the auxiliary power Mⱼ to recharge the rechargeable battery 330 in absence of the power grid 4 (for example, in disaster areas during environmental phenomenon such as earthquakes, tsunamis, etc.). Thus, the supply device 1 may be used by the emergency services to recharge the depleted rechargeable battery 330, thus contributing, in fine, in saving human lives.

Advantageously, the servo switch 50 is further adapted to supply the electric power E to the output terminal 31 from the transformation module 7. This embodiment is particularly appropriate for the case described above when the management module 51 is adapted to assess the active connection state B between the input terminal 30 and the power grid 4. When, on the one hand, the connection between the input terminal 30 and the power grid 4 exhibits the active state B (that is to say, when the input terminal 30 is plugged to the power grid 4) and, on the other hand, the rechargeable battery 330 exhibits the charge state Aᵢ corresponding to the rechargeable battery 330 full charge A₀ (that is to say, Aᵢ = A₀), the servo switch 50 is adapted to supply the electric power E to the output terminal 31 from the input terminal 30 by bypassing the electric power E source 33 (for example, by passing through the management module 51 via the first and second terminals 511, 512).

Thanks to these arrangements, the output terminal 31 may be supplied in a hybrid manner, at the same time, by the transformation module 7 (of renewable type of electric power E) and by the power grid 4 (of non renewable type of electric power E, for example fossil). This contributes in making the supply device 1 more environment-friendly.

Preferably, the servo switch 50 is further adapted to supply electric power E, at the same time, to the output terminal 31 and to the electric power E source 33 from the transformation module 7. This embodiment is particularly adapted to the case described above when the management module 51 is adapted to assess the active connection state B between the input terminal 30 and the power grid 4. When, on the one hand, the connection between the input terminal 30 and the power grid 4 exhibits the active state B, and on the other hand, the rechargeable battery 330 exhibits the charge state Aᵢ corresponding to the rechargeable battery 330 full charge A1 (that is to say, Aᵢ = A₁), the servo switch 50 is adapted to supply the electric power E from the input terminal 30, to both the output terminal 31 and to the electric power E source 33.

Thanks to these arrangements, the output terminal 31 and the rechargeable battery 330 may be supplied in a hybrid manner, at the same time by the transformation module 7 (of renewable energy type electric power E) and by the power grid 4 (of non renewable type of electric power E, for example fossil). This contributes in making the supply device 1 more environment-friendly.

Preferably, the capturing module 6 is adapted to detect at least one amongst the following auxiliary energies Mⱼ: (a) solar energy M0; (b) thermal energy M1; (c) kinetic energy M₂; (d) radio wave energy M₃.

Thanks to these arrangements, the supply device 1 is more environment-friendly as it can transform into electric power E, the solar energy M₀, and/or the thermal energy M₁, and/or the kinetic energy M₂, and/or radio wave energy M₃. Furthermore, this contributes in broadening the functional possibilities of said supply device 1, particularly, during the use of the supply device 1 by the emergency services in disaster areas.

Advantageously, the electric power E source 33 comprises a linear charger 331 adapted to make the electric power E entering the electric power E source 33 pass towards the rechargeable battery 330 or exiting the electric power E source 33 from the rechargeable battery 330.

This simplifies the use of the supply device 1 on a daily basis and contributes in increasing the service life of the rechargeable battery 330 by the fact of the temporal linearization of its "charged/uncharged" cycles.

According to a second aspect, the invention relates to the mobile telecommunication equipment 2 using the supply device 1 according to the invention.

Preferably, the supply device is integrated within the mobile telecommunication equipment 2.

This facilitates the use of the mobile telecommunication equipment 2 on a daily basis, particularly during emergency situations where it is necessary to reduce the risk of loss of the supply device 1.

Alternatively, (case not shown), the supply device 1 may be linked to the mobile telecommunication equipment 2 using a linking means (not shown), for example, using an electric wire.

Thanks to these arrangements, it becomes easier to handle the supply device 1 in space, for example, to orient more precisely the capturing module 6 opposite the sun.

## Claims

1. Electric power (E) supplying device (1) for integration within a mobile telecommunication equipment (2), comprising
an electronic supply circuit (3) having:
an input terminal (30) to be plugged to a power grid (4);
an output terminal (31) adapted to be plugged to the mobile equipment (2);
a ground terminal (32) electrically isolated from the input terminal (30);
an electric power (E) source (33) arranged between the input and output terminals (30), (31) and adapted to supply the mobile equipment (2) with electric power (E) via the output terminal (31), wherein the electric power (E) source (33) is further connected to the ground terminal (32); and
a rechargeable battery (330) adapted to store electric power (E),
a switching regulator (5) comprising:
a servo switch (50) having:
a first commutator (501) arranged between the input terminal (30) and the electric power (E) source (33); and
a second commutator (502) arranged between the electric power (E) source (33) and the output terminal (31); and
a management module (51) comprising a first terminal (511) connected to the first commutator (501) and a second terminal (512) connected to the second commutator (502), the management module (51) being adapted to assess a charge state (Aᵢ) of the rechargeable battery (330), and to drive the servo switch (50) according to said charge state (Aᵢ), the first commutator (501) being adapted to direct the electric power (E) coming from the input terminal (30) among the electric power (E) source (33) and the first terminal (511), the second commutator (502) being adapted to direct the electric power (E) coming from the second terminal (512) among the electric power (E) source (33) and the output terminal (31), and
at least an auxiliary energy (Mⱼ) capturing module (6) adapted to collect the auxiliary energy (Mⱼ) and a transformation module (7) connected to the capturing module (6) and adapted to transform the auxiliary energy (Mⱼ) into electric power (E), the transformation module (7) being further mounted in parallel on the electric power (E) source (33) between the ground terminal (32) and the second terminal (512),
wherein the second commutator (502) is adapted to direct the electric power (E) coming from the transformation module (7) towards the electric power (E) source (33) and/or towards the output terminal (31).

2. The supply device (1) according to claim 1, wherein the management module (51) is adapted to assess an active connection state (B) between the input terminal (30) and the power grid (4), such that when on the one hand, the connection between the input terminal (30) and the power grid (4) exhibits the active state (B) and, on the other hand, the rechargeable battery (330) exhibits the charge state (Aᵢ) corresponding to the rechargeable battery (330) full charge (A₀), the servo switch (50) is adapted to supply the electric power (E) to the output terminal (31) from the input terminal (30) by bypassing the electric power (E) source (33).

3. The supply device (1) according to claim 1 or 2, wherein the management module (51) is adapted to assess an active connection state (B) between the input terminal (30) and the power grid (4), such that when on the one hand, the connection between the input terminal (30) and the power grid (4) exhibits the active state (B) and, on the other hand, the rechargeable battery (330) exhibits the charge state (Aᵢ) corresponding to the rechargeable battery (330) incomplete charge (A₁), the servo switch (50) is adapted to supply the electric power (E) from the input terminal (30), to both the output terminal (31) and the electric power (E) source (33).

4. The supply device (1) according to any one of claims 1 to 3, wherein the management module (51) is adapted to assess an interrupted connection state (C) between the input terminal (30) and the power grid (4), such that when the connection between the input terminal (30) and the power grid (4) exhibits the interrupted state (C), the servo switch (50) is adapted to supply the electric power (E) to the output terminal (31) from the electric power (E) source (33).

5. The supply device (1) according to claim 1 combined with claim 4, wherein the servo switch (50) is adapted to supply the electric power (E) to the output terminal (31) via the second commutator (502), both from the transformation module (7) and from the electric power (E) source (33), when the connection between the input terminal (30) and the power grid (4) exhibits the interrupted state (C).

6. The supply device (1) according to claim 1 or 5 combined with claim 4,
wherein the servo switch (50) is adapted to supply the electric power (E) from the transformation module (7), to both the output terminal (31) and the electric power (E) source (33), when on the one hand, the connection between the input terminal (30) and the power grid (4) exhibits the interrupted state (C), and on the other hand, the rechargeable battery (330) exhibits the charge state (Aᵢ) corresponding to the rechargeable battery (330) incomplete charge (A₁).

7. The supply device (1) according to any one of claims 1 to 6 combined with claims 2 and 4, wherein the servo switch (50) is further adapted to supply the electric power (E) to the output terminal (31) from the transformation module (7).

8. The supply device (1) according to any one of claims 1 to 6 combined with claims 3 and 4, wherein the servo switch (50) is further adapted to supply the electric power (E), to both the output terminal (31) and to the electric power (E) source (33) from the transformation module (7).

9. The supply device (1) according to any one of claims 1 to 8, wherein the capturing module (6) is adapted to detect at least one of the following auxiliary energies (Mⱼ):
- solar energy (M₀);
- thermal energy (M₁);
- kinetic energy (M₂); and
- radio wave energy (M₃).

10. The supply device (1) according to any one of the preceding claims,
wherein the electric power (E) source (33) comprises a linear charger (331) adapted to make the electric power (E) entering the electric power (E) source (33) pass towards the rechargeable battery (330) or exiting the electric power (E) source (33) from the rechargeable battery (330).

11. A mobile telecommunications equipment using the supply device (1) according to any of the preceding claims.

## Patentansprüche

1. Elektrische Energie-(E)-Versorgungsvorrichtung (1) zur Integrierung innerhalb eines mobilen Telekommunikationsgeräts (2), umfassend
einen elektronischen Versorgungsschaltkreis (3) mit:
einem Eingangsanschluss (30) zum Anschließen an ein Stromnetz (4);
einem Ausgangsanschluss (31) eingerichtet zum Anschließen an das mobile Gerät (2);
einem Masseanschluss (32), welcher elektrisch von dem Eingangsanschluss (30) isoliert ist;
einer elektrischen Energie-(E)-Quelle (33), welche zwischen den Eingangs- und Ausgangsanschlüssen (30), (31) angeordnet ist und eingerichtet ist zum Versorgen des mobilen Geräts (2) mit elektrischer Energie (E) über den Ausgangsanschluss (31), wobei die elektrische Energie-(E)-Quelle (33) ferner mit dem Masseanschluss (32) verbunden ist; und
einer wiederaufladbaren Batterie (330), welche eingerichtet ist zum Speichern von elektrischer Energie (E),
einen Schaltregler (5) umfassend:
einen Servo-Schalter (50) mit:
einem ersten Kommutator (501), welcher zwischen dem Eingangsanschluss (30) und der elektrischen Energie-(E)-Quelle (33) angeordnet ist; und
einem zweiten Kommutator (502), welcher zwischen der elektrischen Energie-(E)-Quelle (33) und dem Ausgangsanschluss (31) angeordnet ist; und
ein Steuerungsmodul (51) umfassend einen ersten Anschluss (511), welcher mit dem ersten Kommutator (501) verbunden ist, und einen zweiten Anschluss (512), welcher mit dem zweiten Kommutator (502) verbunden ist, wobei das Steuerungsmodul (51) eingerichtet ist zum Feststellen eines Ladezustands (Ai) der wiederaufladbaren Batterie (330) und zum Ansteuern des Servo-Schalters (50) gemäß dem Ladezustand (Ai), wobei der erste Kommutator (501) eingerichtet ist zum Leiten der von dem Eingangsanschluss (30) kommenden elektrischen Energie (E) zwischen der elektrischen Energie-(E)-Quelle (33) und dem ersten Anschluss (511), wobei der zweite Kommutator (502) eingerichtet ist zum Leiten der von dem zweiten Anschluss (512) kommenden elektrischen Energie (E) zwischen der elektrischen Energie-(E)-Quelle (33) und dem Ausgangsanschluss (31), und
mindestens ein Hilfsenergie-(Mj)-Erfassungsmodul (6) eingerichtet zum Sammeln der Hilfsenergie (Mj) und ein mit dem Erfassungsmodul (6) verbundenes Transformationsmodul (7) eingerichtet zum Transformieren der Hilfsenergie (Mj) in elektrische Energie (E), wobei das Transformationsmodul (7) ferner parallel auf der elektrischen Energie-(E)-Quelle (33) zwischen dem Masseanschluss (32) und dem zweiten Anschluss (512) angebracht ist,
wobei der zweite Kommutator (502) eingerichtet ist zum Leiten der von dem Transformationsmodul (7) kommenden elektrischen Energie (E) zu der elektrischen Energie-(E)-Quelle (33) und/oder zu dem Ausgangsanschluss (31).

2. Die Versorgungsvorrichtung (1) gemäß Anspruch 1, wobei das Steuerungsmodul (51) eingerichtet ist zum Feststellen eines aktiven Verbindungszustands (B) zwischen dem Eingangsanschluss (30) und dem Stromnetz (4), so dass wenn einerseits die Verbindung zwischen dem Eingangsanschluss (30) und dem Stromnetz (4) den aktiven Zustand (B) aufweist und, andererseits, die wiederaufladbare Batterie (330) den Ladezustand (Ai) aufweist, welcher der vollen Ladung (A0) der wiederaufladbaren Batterie (330) entspricht, der Servo-Schalter (50) eingerichtet ist zum Bereitstellen der elektrischen Energie (E) an den Ausgangsanschluss (31) von dem Eingangsanschluss (30) durch Überbrücken der elektrischen Energie-(E)-Quelle (33).

3. Die Versorgungsvorrichtung (1) gemäß Anspruch 1 oder 2, wobei das Steuerungsmodul (51) eingerichtet ist zum Feststellen eines aktiven Verbindungszustands (B) zwischen dem Eingangsanschluss (30) und dem Stromnetz (4), so dass wenn einerseits die Verbindung zwischen dem Eingangsanschluss (30) und dem Stromnetz (4) den aktiven Zustand (B) aufweist und, andererseits, die wiederaufladbare Batterie (330) den Ladezustand (Ai) aufweist, welcher der unvollständigen Ladung (A1) der wiederaufladbaren Batterie (330) entspricht, der Servo-Schalter (50) eingerichtet ist zum Bereitstellen der elektrischen Energie (E) von dem Eingangsanschluss (30) an sowohl den Ausgangsanschluss (31) als auch die elektrische Energie-(E)-Quelle (33).

4. Die Versorgungsvorrichtung (1) gemäß einem der Ansprüche 1 bis 3, wobei das Steuerungsmodul (51) eingerichtet ist zum Feststellen eines unterbrochenen Verbindungszustands (C) zwischen dem Eingangsanschluss (30) und dem Stromnetz (4), so dass wenn die Verbindung zwischen dem Eingangsanschluss (30) und dem Stromnetz (4) den unterbrochenen Zustand (C) aufweist, der Servo-Schalter (50) eingerichtet ist zum Bereitstellen der elektrischen Energie (E) an den Ausgangsanschluss (31) von der elektrischen Energie-(E)-Quelle.

5. Die Versorgungsvorrichtung (1) gemäß Anspruch 1 in Kombination mit Anspruch 4, wobei der Servo-Schalter (50) eingerichtet ist zum Bereitstellen der elektrischen Energie (E) an den Ausgangsanschluss (31) über den zweiten Kommutator (502), sowohl von dem Transformationsmodul (7) als auch von der elektrischen Energie-(E)-Quelle (33), wenn die Verbindung zwischen dem Eingangsanschluss (30) und dem Stromnetz (4) den unterbrochenen Zustand (C) aufweist.

6. Die Versorgungsvorrichtung (1) gemäß Anspruch 1 oder 5 in Kombination mit Anspruch 4, wobei der Servo-Schalter (50) eingerichtet ist zum Bereitstellen der elektrischen Energie (E) von dem Transformationsmodul (7) an sowohl den Ausgangsanschluss (31) als auch die elektrische Energie-(E)-Quelle (33), wenn einerseits die Verbindung zwischen dem Eingangsanschluss (30) und dem Stromnetz (4) den unterbrochenen Zustand (C) aufweist und andererseits die wiederaufladbare Batterie (330) den Ladezustand (Ai) aufweist, welcher der unvollständigen Ladung (A1) der wiederaufladbaren Batterie (330) entspricht.

7. Die Versorgungsvorrichtung (1) gemäß einem der Ansprüche 1 bis 6 in Kombination mit den Ansprüchen 2 und 4, wobei der Servo-Schalter (50) ferner eingerichtet ist zum Bereitstellen der elektrischen Energie (E) an den Ausgangsanschluss (31) von dem Transformationsmodul (7).

8. Die Versorgungsvorrichtung (1) gemäß einem der Ansprüche 1 bis 6 in Kombination mit den Ansprüchen 3 und 4, wobei der Servo-Schalter (50) ferner eingerichtet ist zum Bereitstellen der elektrischen Energie (E) an sowohl den Ausgangsanschluss (31) als auch an die elektrische Energie-(E)-Quelle (33) von dem Transformationsmodul (7).

9. Die Versorgungsvorrichtung (1) gemäß einem der Ansprüche 1 bis 8, wobei das Erfassungsmodul (6) eingerichtet ist zum Feststellen zumindest einer der folgenden Hilfsenergien (Mj):
- Solarenergie (M0);
- thermische Energie (M1);
- kinetische Energie (M2); und
- Radiowellenenergie (M3).

10. Die Versorgungsvorrichtung (1) gemäß einem der vorhergehenden Ansprüche, wobei die elektrische Energie-(E)-Quelle (33) einen linearen Lader (331) umfasst, welcher eingerichtet ist, die elektrische Energie (E), welche in die elektrische Energie-(E)-Quelle (33) eintritt, dazu zu veranlassen, zu der wiederaufladbaren Batterie zu fließen oder die elektrische Energie-(E)-Quelle (33) von der wiederaufladbaren Batterie (330) zu verlassen.

11. Mobiles Telekommunikationsgerät, welches die Versorgungsvorrichtung (1) gemäß einem der vorhergehenden Ansprüche verwendet.

## Revendications

1. Dispositif fournissant de l'énergie électrique (E), destiné à être intégré dans un équipement de télécommunications mobiles (2), comprenant :
un circuit électronique d'alimentation (3) possédant :
une borne d'entrée (30) à raccorder à un réseau électrique (4) ;
une borne de sortie (31) conçue pour être raccordée à l'équipement mobile (2) ;
une borne de masse (32) isolée électriquement de la borne d'entrée (30) ;
une source d'énergie électrique (E) (33) disposée entre les bornes d'entrée et de sortie (30, 31) et conçue pour fournir de l'énergie électrique (E) à l'équipement mobile (2) via la borne de sortie (31), dans lequel la source d'énergie électrique (E) (33) est en outre connectée à la borne de masse (32) ; et
une batterie rechargeable (330) conçue pour stocker de l'énergie électrique (E) ;
un régulateur de commutation (5) comprenant :
un commutateur asservi (50) possédant :
un premier commutateur (501) disposé entre la borne d'entrée (30) et la source d'énergie électrique (E) (33) ; et
un second commutateur (502) disposé entre la source d'énergie électrique (E) (33) et la borne de sortie (31) ; et
un module de gestion (51) comprenant une première borne (511) connectée au premier commutateur (501) et une seconde borne (512) connectée au second commutateur (502), le module de gestion (51) étant conçu pour déterminer un état de chargement (Aᵢ) de la batterie rechargeable (330) et pour commander le commutateur asservi (50) en fonction dudit état de chargement (Aᵢ), le premier commutateur (501) étant conçu pour envoyer l'énergie électrique (E) provenant de la borne d'entrée (30) soit à la source d'énergie électrique (E) (33), soit à la première borne (511), le second commutateur (502) étant conçu pour envoyer l'énergie électrique (E) provenant de la seconde borne (512) soit à la source d'énergie électrique (E) (33), soit à la borne de sortie (31) ; et
au moins un module de collecte d'énergie auxiliaire (Mⱼ) (6) conçu pour recueillir l'énergie auxiliaire (Mⱼ) et un module de transformation (7) connecté au module de collecte (6) et conçu pour transformer l'énergie auxiliaire (Mⱼ) en énergie électrique (E), le module de transformation (7) étant en outre monté en parallèle avec la source d'énergie électrique (E) (33) entre la borne de masse (32) et la seconde borne (512) ;
dans lequel le second commutateur (502) est conçu pour envoyer l'énergie électrique (E) provenant du module de transformation (7) vers la source d'énergie électrique (E) (33) et/ou vers la borne de sortie (31).

2. Dispositif d'alimentation (1) selon la revendication 1, dans lequel le module de gestion (51) est conçu pour déterminer un état de connexion actif (B) entre la borne d'entrée (30) et le réseau électrique (4), si bien que, lorsque d'une part la connexion entre la borne d'entrée (30) et le réseau électrique (4) est dans l'état actif (B) et lorsque d'autre part la batterie rechargeable (330) présente l'état de chargement (Aᵢ) correspondant à la pleine charge (A₀) de la batterie rechargeable (330), le commutateur asservi (50) est conçu pour fournir l'énergie électrique (E) provenant de la borne d'entrée (30) à la borne de sortie (31), en court-circuitant la source d'énergie électrique (E) (33).

3. Dispositif d'alimentation (1) selon la revendication 1 ou 2, dans lequel le module de gestion (51) est conçu pour déterminer un état de connexion actif (B) entre la borne d'entrée (30) et le réseau électrique (4), si bien que, lorsque d'une part la connexion entre la borne d'entrée (30) et le réseau électrique (4) est dans l'état actif (B) et lorsque d'autre part la batterie rechargeable (330) présente l'état de chargement (Aᵢ) correspondant à la charge incomplète (A₁) de la batterie rechargeable (330), le commutateur asservi (50) est conçu pour fournir l'énergie électrique (E) provenant de la borne d'entrée (30) à la fois à la borne de sortie (31) et à la source d'énergie électrique (E) (33).

4. Dispositif d'alimentation (1) selon l'une quelconque des revendications 1 à 3, dans lequel le module de gestion (51) est conçu pour déterminer un état de connexion interrompu (C) entre la borne d'entrée (30) et le réseau électrique (4), si bien que lorsque la connexion entre la borne d'entrée (30) et le réseau électrique (4) présente l'état d'interruption (C), le commutateur asservi (50) est conçu pour fournir l'énergie électrique (E) à la borne de sortie (31) à partir de la source d'énergie électrique (E) (33).

5. Dispositif d'alimentation (1) selon la revendication 1 combinée à la revendication 4, dans lequel le commutateur asservi (50) est conçu pour fournir à la borne de sortie (31) via le second commutateur (502) l'énergie électrique (E) provenant à la fois du module de transformation (7) et de la source d'énergie électrique (E) (33), lorsque la connexion entre la borne d'entrée (30) et le réseau électrique (4) présente l'état d'interruption (C).

6. Dispositif d'alimentation (1) selon la revendication 1 ou 5 combinée à la revendication 4, dans lequel le commutateur asservi (50) est conçu pour fournir l'énergie électrique (E) provenant du module de transformation (7) à la fois à la borne de sortie (31) et à la source d'énergie électrique (E) (33) lorsque, d'une part, la connexion entre la borne d'entrée (30) et le réseau électrique (4) présente l'état d'interruption (C) et lorsque, d'autre part, la batterie rechargeable (330) présente l'état de chargement (Aᵢ) correspondant à la charge incomplète (A₁) de la batterie rechargeable (330).

7. Dispositif d'alimentation (1) selon l'une quelconque des revendications 1 à 6 combinée aux revendications 2 et 4, dans lequel le commutateur asservi (50) est conçu en outre pour fournir l'énergie électrique (E) provenant du module de transformation (7) à la borne de sortie (31).

8. Dispositif d'alimentation (1) selon l'une quelconque des revendications 1 à 6 combinée aux revendications 3 et 4, dans lequel le commutateur asservi (50) est conçu en outre pour fournir l'énergie électrique (E) provenant du module de transformation (7) à la fois à la borne de sortie (31) et à la source d'énergie électrique (E) (33).

9. Dispositif d'alimentation (1) selon l'une quelconque des revendications 1 à 8, dans lequel le module de collecte (6) est conçu pour détecter au moins l'une des énergies auxiliaires (Mⱼ) suivantes :
- énergie solaire (M₀) ;
- énergie thermique (M₁) ;
- énergie cinétique (M₂) ; et
- énergie radioélectrique (M₃).

10. Dispositif d'alimentation (1) selon l'une quelconque des revendications précédentes, dans lequel la source d'énergie électrique (E) (33) comprend un chargeur linéaire (331) conçu pour que l'énergie électrique (E) entrant dans la source d'énergie électrique (E) (33) soit envoyée à la batterie rechargeable (330) ou pour que celle sortant de la source d'énergie électrique (E) (33) provienne de la batterie rechargeable (330).

11. Équipement de télécommunications mobiles utilisant le dispositif d'alimentation (1) selon l'une quelconque des revendications précédentes.
